# FASCICULE DE BREVET EUROPEEN

(11) **EP 4 668 548 B1**
(45) Date de publication et mention de la délivrance du brevet: **04.11.2026**
(21) Numéro de dépôt: 25183572.4
(22) Date de dépôt: 18.06.2025
(51) Int. Cl.: H02K 5/167, F16C 25/02, F16C 27/06, F16C 35/02

(54) **ACTIONNEUR ÉLECTROMÉCANIQUE, DISPOSITIF D'OCCULTATION COMPRENANT UN TEL ACTIONNEUR ET PROCÉDÉ DE FABRICATION D'UN TEL ACTIONNEUR**
ELEKTROMECHANISCHER AKTUATOR, VERDUNKELUNGSVORRICHTUNG MIT SOLCH EINEM AKTUATOR UND VERFAHREN ZUR HERSTELLUNG SOLCH EINES AKTUATORS
ELECTROMECHANICAL ACTUATOR, CONCEALMENT DEVICE COMPRISING SUCH AN ACTUATOR AND METHOD FOR MANUFACTURING SUCH AN ACTUATOR

(30) Priorité: 19.06.2024 FR 2406567
(43) Date de publication de la demande: 24.12.2025
(73) Titulaire: Somfy Activites SA, 74300 Cluses (FR)
(72) Inventeur: DOCHE, Florian, 74300 CLUSES (FR); BERDAT, Clément, 74300 CLUSES (FR)
(74) Mandataire: Lavoix

(56) Documents cités:
- EP-B1- 2 705 591
- EP-B1- 2 922 183
- DE-A1- 2 342 747
- DE-B4- 102013 221 761
- US-A1- 2007 009 193

## Description

La présente invention concerne un actionneur électromécanique pour un dispositif d'occultation, autrement dit un actionneur électromécanique d'un dispositif d'occultation.

La présente invention concerne également un dispositif d'occultation comprenant un écran entraîné en déplacement par un tel actionneur électromécanique, ainsi qu'un procédé de fabrication d'un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document EP 2 922 183 A1 qui décrit un actionneur électromécanique pour un dispositif d'occultation. L'actionneur électromécanique comprend un moteur électrique. Le moteur électrique comprend un rotor, un stator, un palier, un corps de stator et un joint élastique annulaire. Le rotor comprend un arbre. Le rotor et le stator sont positionnés de manière coaxiale autour d'un axe de rotation. Le palier comprend une surface externe. L'arbre est supporté par le palier. Le corps de stator comprend un logement. Le logement comprend une surface interne, une ouverture d'entrée, un épaulement et une pluralité d'encoches. Le palier est disposé à l'intérieur du logement. Chacune des encoches est ménagée dans la surface interne du logement. Le joint élastique annulaire est disposé autour du palier. Le joint élastique annulaire est comprimé entre la surface interne du logement du corps de stator et la surface externe du palier. Cet actionneur électromécanique donne globalement satisfaction.

En l'absence de joint élastique annulaire autour du palier, lorsque l'arbre du rotor et le palier sont alignés suivant l'axe de rotation, un jeu de montage entre ceux-ci génère un bruit de fonctionnement et, en particulier, de claquement du moteur électrique.

En outre, lorsque le palier est monté de manière fixe à l'intérieur du logement du corps de stator, des défauts d'alignement sont présents entre l'arbre du rotor et le palier qui génèrent des frottements et, par conséquent, un bruit de fonctionnement et des pertes de rendement du moteur électrique.

Pour contrer ce bruit de fonctionnement et, en particulier, de claquement du moteur électrique, l'ajout du joint élastique annulaire autour du palier permet d'obtenir une liaison rotule et, plus particulièrement, d'amortissement entre le palier et le logement du corps de stator.

Cependant, cet actionneur électromécanique présente, d'une part, l'inconvénient que les encoches du logement du corps de stator sont uniquement des encoches d'introduction, qui sont ménagées au niveau de l'ouverture d'entrée du logement du corps de stator, et, d'autre part, l'inconvénient que la surface interne du logement du corps de stator est pleine sur le reste de sa longueur entre les encoches d'introduction et la butée.

Ainsi, lors de l'introduction du joint élastique annulaire, qui est assemblé sur le palier, à l'intérieur du logement du corps de stator, le joint élastique annulaire se détend dans les encoches d'introduction. Puis, le joint élastique annulaire est pincé entre la surface externe du palier et la surface interne du corps de stator, tout au long du trajet d'insertion du joint élastique annulaire à l'intérieur du logement du corps de stator.

De cette manière, le joint élastique annulaire se vrille et peut se déchirer en raison d'un effort de cisaillement, lors du trajet d'insertion du joint élastique annulaire à l'intérieur du logement du corps de stator.

Par conséquent, le joint élastique annulaire peut être mal positionné, voire endommagé, suite à l'insertion du joint élastique annulaire à l'intérieur du logement du corps de stator.

Ce défaut de positionnement et/ou cet endommagement du joint élastique annulaire engendre un défaut d'alignement du palier par rapport à l'arbre du rotor et provoque un défaut d'assemblage du moteur électrique, qui peut être soit un défaut de sertissage au niveau de l'ouverture d'entrée du logement du corps de stator, soit une impossibilité de monter l'arbre du rotor dans le palier.

Pour pallier ces problématiques de positionnement et/ou d'endommagement du joint élastique annulaire, une opération de huilage du logement du corps de stator est mise en œuvre avant l'insertion du joint élastique annulaire à l'intérieur du logement du corps de stator.

Une telle opération de huilage du logement du corps de stator engendre une augmentation du coût d'obtention du moteur électrique.

Par ailleurs, les encoches d'introduction ont pour fonction d'empêcher une rotation du palier autour de l'axe de rotation.

La présente invention a pour but de résoudre les inconvénients précités et de proposer un actionneur électromécanique pour un dispositif d'occultation, un dispositif d'occultation comprenant un tel actionneur électromécanique, ainsi qu'un procédé de fabrication d'un tel actionneur électromécanique, permettant, d'une part, de garantir la conformité d'assemblage d'un joint élastique annulaire, qui est assemblé sur un premier palier, à l'intérieur d'un premier logement d'un premier flasque et, d'autre part, de minimiser un niveau de bruit de fonctionnement du moteur électrique.

A cet égard, la présente invention vise, selon un premier aspect, un actionneur électromécanique pour un dispositif d'occultation,
l'actionneur électromécanique comprenant au moins un moteur électrique,
le moteur électrique comprenant au moins :
   - un rotor, le rotor comprenant au moins un arbre,
   - un stator, le rotor et le stator étant positionnés de manière coaxiale autour d'un axe de rotation,
   - un premier palier, le premier palier comprenant une surface externe, l'arbre étant supporté par le premier palier,
   - un premier flasque, le premier flasque comprenant au moins un premier logement, le premier logement comprenant au moins une surface interne, une ouverture d'entrée, un premier épaulement et une pluralité d'encoches, le premier palier étant disposé à l'intérieur du premier logement, chacune des encoches étant ménagée dans la surface interne du premier logement, et
   - un joint élastique annulaire, le joint élastique annulaire étant disposé autour du premier palier, le joint élastique annulaire étant comprimé entre la surface interne du premier logement du premier flasque et la surface externe du premier palier.

Selon l'invention, chacune des encoches s'étend à partir du premier épaulement vers l'ouverture d'entrée sur une première distance prédéterminée, suivant la direction de l'axe de rotation, la première distance prédéterminée étant strictement inférieure à une première longueur mesurée entre le premier épaulement et l'ouverture d'entrée, suivant la direction de l'axe de rotation. En outre, le joint élastique annulaire est introduit à l'intérieur des encoches, dans une position du joint élastique annulaire inséré à l'intérieur du premier logement du premier flasque, de sorte que le joint élastique annulaire se relâche localement à l'intérieur de ces encoches.

Ainsi, cette construction du moteur électrique permet, d'une part, de garantir la conformité d'assemblage du joint élastique annulaire, qui est assemblé sur le premier palier, à l'intérieur du premier logement du premier flasque et, d'autre part, de minimiser un niveau de bruit de fonctionnement du moteur électrique.

De cette manière, le joint élastique annulaire peut être inséré à partir de l'ouverture d'entrée du premier logement jusqu'aux encoches ménagées dans la surface interne du premier logement, de sorte que le joint élastique annulaire se relâche localement à l'intérieur de ces encoches.

Les encoches sont donc présentes uniquement à la fin du trajet d'insertion du joint élastique annulaire à l'intérieur du premier logement du premier flasque.

Par conséquent, ces encoches n'engendrent pas un vrillage, ni, éventuellement, une déchirure du joint élastique annulaire, lors de l'insertion du joint élastique annulaire, qui est assemblé sur le premier palier, à l'intérieur du premier logement du premier flasque.

En outre, le positionnement du joint élastique annulaire dans les encoches ménagées dans la surface interne du premier logement permet de garantir le maintien en position du premier palier par rapport au premier logement, en particulier suivant la direction de l'axe de rotation, que ce soit lors du fonctionnement du moteur électrique ou lors d'une chute de celui-ci au cours d'une opération de manutention.

Par ailleurs, la compression d'une partie du joint élastique annulaire entre la surface interne du premier logement du premier flasque et la surface externe du premier palier, autrement dit le maintien en position de la partie du joint élastique annulaire en dehors des encoches ménagées dans la surface interne du premier logement, permet d'obtenir une liaison rotule et, plus particulièrement, d'amortissement entre le premier palier et le premier logement du premier flasque.

Selon une caractéristique avantageuse de l'invention, le premier palier comprend un deuxième épaulement. En outre, le joint élastique annulaire est disposé entre le premier épaulement et le deuxième épaulement.

Selon une autre caractéristique avantageuse de l'invention, le premier palier est un coussinet.

Selon une autre caractéristique avantageuse de l'invention, le moteur électrique comprend, en outre :
- un deuxième palier, l'arbre étant supporté par le deuxième palier, et
- un deuxième flasque, le deuxième flasque comprenant un deuxième logement, le deuxième palier étant disposé à l'intérieur du deuxième logement.

Selon une autre caractéristique avantageuse de l'invention, le deuxième palier est un roulement.

Selon une autre caractéristique avantageuse de l'invention, une partie de la surface externe du premier palier forme une pente d'introduction, de sorte à introduire le joint élastique annulaire sur la surface externe du premier palier, la pente d'introduction s'étendant sur une deuxième distance prédéterminée à partir d'une extrémité du premier palier vers le premier épaulement, suivant la direction de l'axe de rotation.

Selon une autre caractéristique avantageuse de l'invention, au moins une partie de la surface interne du premier logement forme une pente de guidage, de sorte à guider le joint élastique annulaire contre la surface interne du premier logement.

Selon une autre caractéristique avantageuse de l'invention, l'ouverture d'entrée du premier logement comprend un chanfrein.

La présente invention vise, selon un deuxième aspect, un dispositif d'occultation, le dispositif d'occultation comprenant au moins :
- un écran, et
- un actionneur électromécanique, conforme à l'invention et tel que mentionné ci-dessus, l'écran étant entraîné en déplacement par l'actionneur électromécanique.

Ce dispositif d'occultation présente des caractéristiques et avantages analogues à ceux décrits précédemment, en relation avec l'actionneur électromécanique selon l'invention.

La présente invention vise, selon un troisième aspect, un procédé de fabrication d'un actionneur électromécanique, conforme à l'invention et tel que mentionné ci-dessus.

Le procédé comprend au moins les étapes suivantes :
- une étape d'assemblage du joint élastique annulaire autour du premier palier, et
- une étape d'insertion du joint élastique annulaire, qui est assemblé sur le premier palier, à l'intérieur du premier logement du premier flasque.

Selon l'invention, le procédé comprend, en outre :
- suite à l'étape d'insertion, une étape d'introduction du joint élastique annulaire à l'intérieur des encoches.

Ce procédé de fabrication d'un actionneur électromécanique présente des caractéristiques et avantages analogues à ceux décrits précédemment en relation avec l'actionneur électromécanique selon l'invention.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation comprenant un dispositif d'occultation conforme à un mode de réalisation de l'invention ;
[Fig 2] la figure 2 est une vue schématique en perspective de l'installation illustrée à la figure 1 ;
[Fig 3] la figure 3 est une vue schématique en perspective d'un dispositif d'entraînement motorisé de l'installation illustrée aux figures 1 et 2, ce dispositif d'entraînement motorisé comprenant un actionneur électromécanique conforme à l'invention et un tube d'enroulement ;
[Fig 4] la figure 4 est une vue schématique en coupe de l'actionneur électromécanique illustré à la figure 3, selon un plan de coupe passant par un axe de rotation de l'actionneur électromécanique, cette vue schématique en coupe étant interrompue localement au niveau de deux parties de l'actionneur électromécanique ;
[Fig 5] la figure 5 est une vue schématique en coupe et à plus grande échelle d'un moteur électrique de l'actionneur électromécanique illustré à la figure 4 ;
[Fig 6] la figure 6 est une vue schématique en coupe et à plus grande échelle d'un flasque du moteur électrique illustré à la figure 5, dans lequel sont logés un palier et un joint élastique annulaire, où le plan de coupe passe par deux encoches du flasque, opposées l'une par rapport à l'autre, et par l'axe de rotation ;
[Fig 7] la figure 7 est une vue analogue à la figure 6, où le plan de coupe est décalé angulairement autour de l'axe de rotation, de sorte à ne pas passer par des encoches du flasque ;
[Fig 8] la figure 8 est une vue schématique en perspective d'un ensemble formé par le flasque, le palier et le joint élastique annulaire illustrés aux figures 6 et 7 ; et
[Fig 9] la figure 9 est une vue schématique en perspective du flasque illustré aux figures 6 à 8.

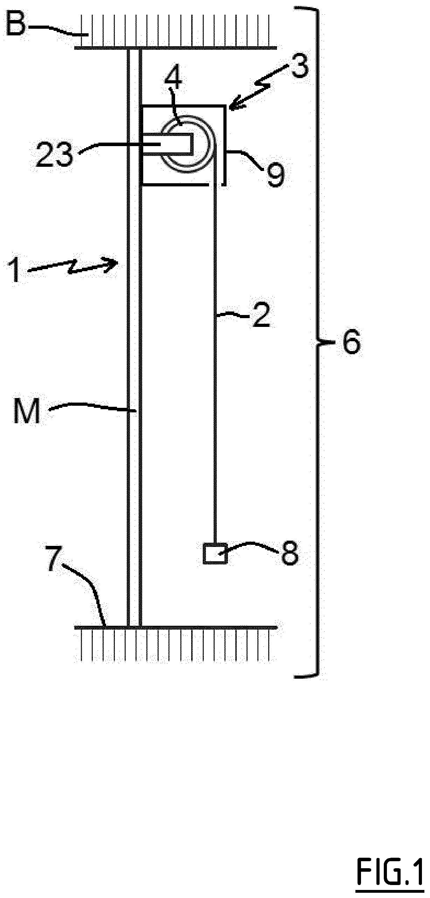

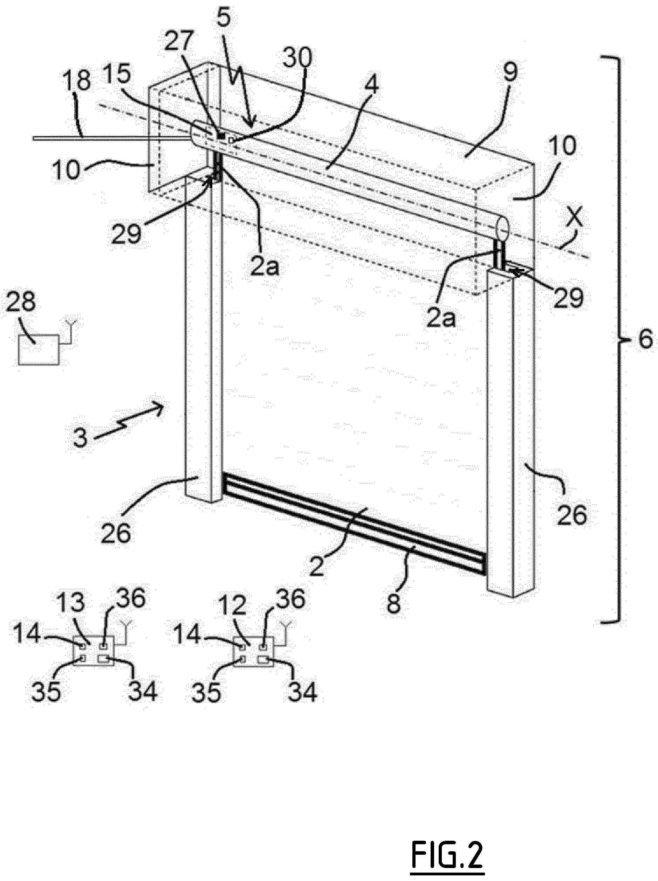

On décrit tout d'abord, en référence aux figures 1 et 2, une installation 6 comprenant un dispositif de fermeture, d'occultation ou de protection solaire 3 conforme à un mode de réalisation de l'invention. Cette installation 6, installée dans un bâtiment B, comporte une ouverture 1, dans laquelle est disposée une fenêtre ou une porte, non représentée. Cette installation 6 est équipée d'un écran 2 appartenant au dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un store, notamment un store comprenant une toile enroulable, un store comprenant un écran plissé ou alvéolé ou un store avec des lames orientables, ou un volet roulant. La présente invention s'applique à tous les types de dispositif d'occultation.

Ici, l'installation 6 comprend le dispositif d'occultation 3.

On décrit, en référence aux figures 1 et 2, un store enroulable conforme à un mode de réalisation de l'invention.

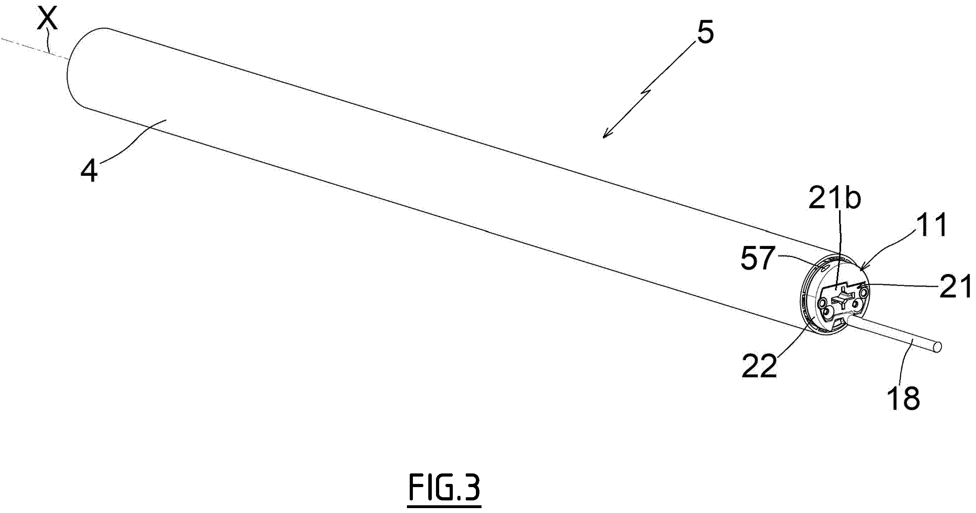

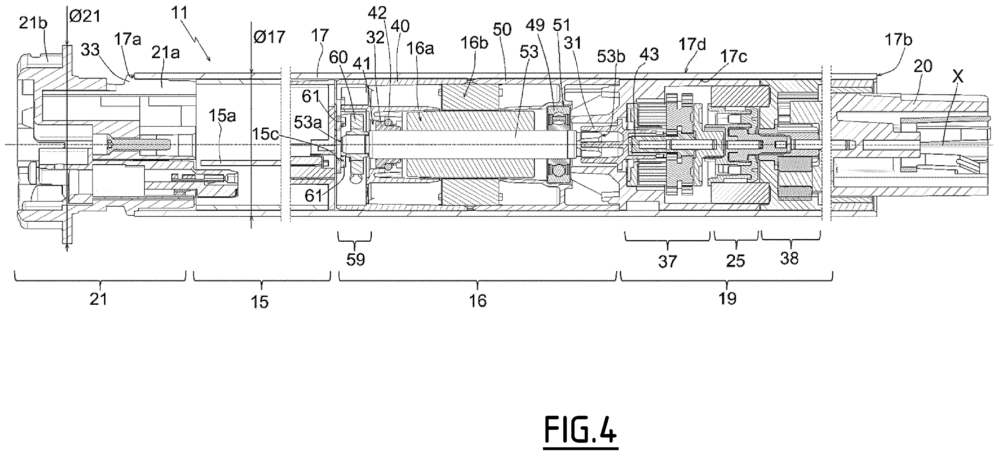

Le dispositif d'occultation 3 comprend un dispositif d'entraînement motorisé 5. Le dispositif d'entraînement motorisé 5 comprend un actionneur électromécanique 11 illustré aux figures 3 et 4.

L'écran 2 est configuré pour être déplacé, autrement dit est déplacé, au moyen du dispositif d'entraînement motorisé 5 et, plus particulièrement, de l'actionneur électromécanique 11.

Avantageusement, le dispositif d'entraînement motorisé 5 et, par conséquent, le dispositif d'occultation 3 comprend, en outre, un tube d'enroulement 4. En outre, le tube d'enroulement 4 est agencé de sorte à être entraîné en rotation par l'actionneur électromécanique 11.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, en particulier dans une configuration assemblée du dispositif d'occultation 3.

Ainsi, le tube d'enroulement 4 est maintenu par l'intermédiaire des supports 23. Un seul des supports 23 est visible à la figure 1 et ceux-ci ne sont pas représentés à la figure 2. Les supports 23 permettent de lier mécaniquement le dispositif d'occultation 3 à la structure du bâtiment B, notamment à un mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, en particulier dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

Avantageusement, le caisson 9 comprend deux joues 10, telles qu'illustrées à la figure 2. Une joue 10 est disposée à chaque extrémité du caisson 9, en particulier dans la configuration assemblée du dispositif d'occultation 3.

En variante, représentée à la figure 2, le tube d'enroulement 4 est maintenu par l'intermédiaire du caisson 9, en particulier par l'intermédiaire des joues 10 du caisson 9, sans utiliser des supports, tels que les supports 23 mentionnés ci-dessus.

Avantageusement, le dispositif d'occultation 3 peut également comprendre deux coulisses latérales 26, comme illustré uniquement à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2. La barre de charge 8 peut également être appelée lame d'extrémité finale.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure, non représentée, ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Le mode de fixation de l'écran 2 sur le tube d'enroulement 4 n'est pas limitatif et peut être différent. Il peut être mis en œuvre, par exemple, au moyen d'un adhésif ou d'une ou plusieurs articulations fixées, notamment par vissage ou par rivetage, au tube d'enroulement 4.

Quel que soit le mode de réalisation, la première extrémité de l'écran 2 est disposée au niveau du dispositif de maintien 9, 23.

Dans le cas d'un store enroulable, la position haute enroulée correspond à une position de fin de course haute prédéterminée, ou encore à la mise en appui de la barre de charge 8 de l'écran 2 contre un bord du caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment B.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation 6 comprend soit l'unité de commande locale 12, soit l'unité de commande centrale 13, soit l'unité de commande locale 12 et l'unité de commande centrale 13.

Des moyens de commande de l'actionneur électromécanique 11, permettant le déplacement de l'écran 2 du dispositif d'occultation 3, sont constitués par au moins une unité de contrôle 15, en particulier une unité électronique de contrôle.

Cette unité de contrôle 15 appartient au dispositif d'entraînement motorisé 5 et, plus particulièrement, à l'actionneur électromécanique 11. Celle-ci est apte à mettre en fonctionnement un moteur électrique 16 de l'actionneur électromécanique 11 et, en particulier, à permettre l'alimentation en énergie électrique du moteur électrique 16.

Ainsi, l'unité de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 30, comme illustré à la figure 2.

Avantageusement, l'unité de contrôle 15 comprend, en outre, un premier module de communication 27, comme illustré à la figure 2, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité de contrôle 15 est de type sans fil. En particulier, le premier module de communication 27 est configuré pour recevoir des ordres de commande radioélectriques.

Avantageusement, le premier module de communication 27 peut en complément ou en variante permettre la réception d'ordres de commande transmis par des moyens filaires.

Avantageusement, l'unité de contrôle 15, l'unité de commande locale 12 et/ou l'unité de commande centrale 13 peuvent être en communication avec une station météorologique, non représentée, disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Avantageusement, l'unité de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent être des boutons poussoirs et/ou des touches sensitives. Les éléments d'affichage peuvent être des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, et/ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité de contrôle 15.

Ainsi, le deuxième module de communication 36 de l'unité de commande locale 12 ou de l'unité de commande centrale 13 échange des ordres de commande avec le premier module de communication 27 de l'unité de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur M du bâtiment B ou sur une face d'un cadre dormant d'une fenêtre ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Avantageusement, l'installation d'occultation 6 comprend, en outre, au moins un capteur, non représenté.

Avantageusement, le capteur comprend au moins un deuxième module de communication 36, tel que celui décrit en référence à l'unité de commande locale 12 ou à l'unité de commande centrale 13. En outre, le deuxième module de communication 36 du capteur est configuré pour communiquer, autrement dit communique, avec le premier module de communication 27 de l'unité de contrôle 15.

Avantageusement, le capteur peut être, par exemple, un capteur d'éclairement, un capteur de température, un capteur d'humidité ou un capteur de vent.

Ainsi, le dispositif d'entraînement motorisé 5 peut également être contrôlé automatiquement par la réception d'un ordre de commande correspondant à au moins un signal provenant du capteur.

En complément ou en variante, le dispositif d'entraînement motorisé 5 peut également être contrôlé automatiquement par la réception d'un ordre de commande correspondant à au moins un signal provenant d'une horloge, non représentée, de l'unité de contrôle 15, en particulier du microcontrôleur 30.

En complément ou en variante, le capteur et/ou l'horloge peuvent être intégrés à l'unité de commande locale 12 ou à l'unité de commande centrale 13.

On décrit à présent, plus en détail et en référence aux figures 3 à 5, le dispositif d'entraînement motorisé 5, y compris l'actionneur électromécanique 11, appartenant à l'installation 6 et, plus particulièrement, au dispositif d'occultation 3 illustré aux figures 1 et 2.

Sur la figure 4, les côtés gauche et droit de l'actionneur électromécanique 11 sont inversés par rapport à la figure 3.

L'actionneur électromécanique 11 comprend le moteur électrique 16.

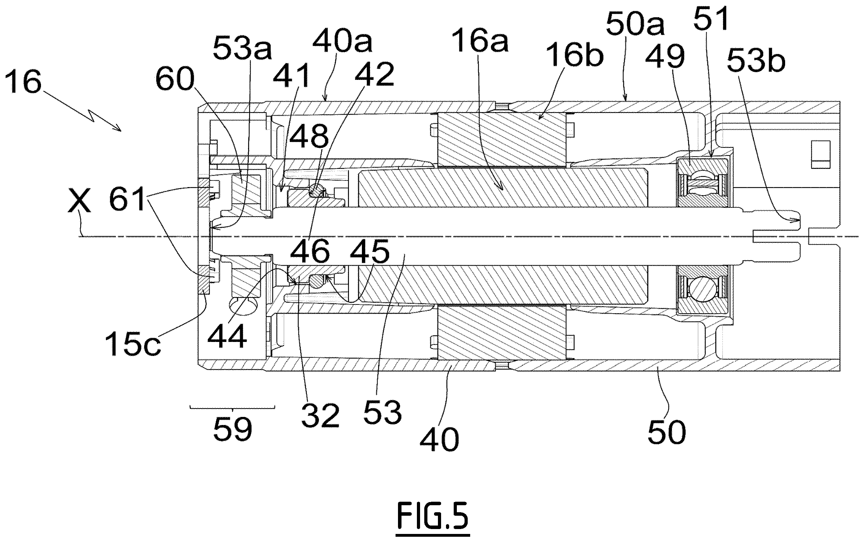

Le moteur électrique 16 comprend un rotor 16a et un stator 16b, comme illustré aux figures 4 et 5.

Ici, le rotor 16a et le stator 16b sont positionnés de manière coaxiale autour de l'axe de rotation X, qui est également l'axe de rotation du tube d'enroulement 4 en configuration montée du dispositif d'entraînement motorisé 5.

Avantageusement, le moteur électrique 16 peut être de type sans balais à commutation électronique, appelé également « BLDC » (acronyme du terme anglo-saxon BrushLess Direct Current) ou « synchrone à aimants permanents », de type à courant continu ou de type asynchrone.

Avantageusement, le rotor 16a du moteur électrique 16 comprend un arbre 53.

Avantageusement, l'arbre 53 comprend une première extrémité 53a et une deuxième extrémité 53b. La deuxième extrémité 53b est opposée à la première extrémité 53a.

Avantageusement, l'actionneur électromécanique 11 comprend, en outre, un réducteur 19.

Le réducteur 19 est accouplé, autrement dit est configuré pour être accouplé, avec le moteur électrique 16, en particulier dans une configuration assemblée de l'actionneur électromécanique 11.

Avantageusement, l'actionneur électromécanique 11 comprend, en outre, un dispositif de transmission de couple 31.

Ici, le dispositif de transmission de couple 31 est constitué d'un organe monobloc, pouvant également être appelé cardan.

Ici, un arbre d'entrée 43 du réducteur 19 est accouplé, autrement dit est configuré pour être accouplé, avec le rotor 16a du moteur électrique 16 par l'intermédiaire du dispositif de transmission de couple 31, en particulier dans la configuration assemblée de l'actionneur électromécanique 11.

Avantageusement, le réducteur 19 comprend un ou plusieurs étages de réduction 37, 38. L'étage de réduction 37, 38, l'un des étages de réduction 37, 38 ou chaque étage de réduction 37, 38 peut être de type épicycloïdal.

Le nombre d'étages de réduction du réducteur n'est pas limitatif. Le nombre d'étages de réduction peut être égal à un, à deux ou supérieur ou égal à trois.

Avantageusement, l'actionneur électromécanique 11 comprend, en outre, un carter 17, en particulier tubulaire.

Ici, le moteur électrique 16 et, éventuellement, le réducteur 19 et le dispositif de transmission de couple 31 sont logés, autrement dit sont montés, à l'intérieur du carter 17, en particulier dans la configuration assemblée de l'actionneur électromécanique 11.

Ici, le carter 17 est creux. Le carter 17 comprend une première extrémité 17a et une deuxième extrémité 17b. La deuxième extrémité 17b est opposée à la première extrémité 17a.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Ici, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, une couronne, non représentée, pouvant également être appelée manchon.

La couronne est disposée, autrement dit est configurée pour être disposée, au voisinage de la première extrémité 17a du carter 17, en particulier dans la configuration assemblée de l'actionneur électromécanique 11.

Avantageusement, le dispositif d'entraînement motorisé 5 et, plus particulièrement, l'actionneur électromécanique 11 comprend, en outre, un câble d'alimentation électrique 18, comme illustré aux figures 2 et 3.

Avantageusement, l'unité de contrôle 15 peut être alimentée en énergie électrique au moyen du câble d'alimentation électrique 18 connecté électriquement à au moins une source d'alimentation en énergie électrique, non représentée, pouvant être, par exemple, un réseau d'alimentation en énergie électrique, notamment du secteur ou dit « PoE » (acronyme du terme anglo-saxon Power over Ethernet), et/ou à une batterie, qui peut être rechargeable, notamment au moyen d'un panneau photovoltaïque et/ou d'un chargeur, non représenté, ou au travers du réseau d'alimentation en énergie électrique.

Ainsi, le câble d'alimentation électrique 18 permet une alimentation en énergie électrique de l'actionneur électromécanique 11, en particulier de l'unité de contrôle 15 et du moteur électrique 16, à partir de la ou des source(s) d'alimentation en énergie électrique.

Avantageusement, l'actionneur électromécanique 11 comprend, en outre, un arbre de sortie 20. En outre, l'arbre de sortie 20 de l'actionneur électromécanique 11 est disposé, autrement dit est configuré pour être disposé, au voisinage de la deuxième extrémité 17b du carter 17, en particulier dans la configuration assemblée de l'actionneur électromécanique 11.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 de l'actionneur électromécanique 11 est en saillie par rapport au carter 17 de l'actionneur électromécanique 11, en particulier par rapport à la deuxième extrémité 17b du carter 17.

Avantageusement, l'arbre de sortie 20 de l'actionneur électromécanique 11 est configuré pour entraîner en rotation un élément de liaison, non représenté, relié au tube d'enroulement 4. L'élément de liaison est, par exemple, réalisé sous la forme d'une roue. Cet élément de liaison est solidaire en rotation, autour de l'axe de rotation X, à la fois de l'arbre de sortie 20 et du tube d'enroulement 4.

Lors de la mise en fonctionnement de l'actionneur électromécanique 11, le moteur électrique 16 et le réducteur 19 entraînent en rotation l'arbre de sortie 20 de l'actionneur électromécanique 11. En outre, l'arbre de sortie 20 de l'actionneur électromécanique 11 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

Avantageusement, l'actionneur électromécanique 11 comprend, en outre, un frein 25.

Le frein 25 est configuré pour freiner et/ou pour bloquer en rotation l'arbre de sortie 20 de l'actionneur électromécanique 11, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Avantageusement, le frein 25 est logé, autrement dit est monté, à l'intérieur du carter 17 de l'actionneur électromécanique 11, en particulier dans la configuration assemblée de l'actionneur électromécanique 11.

Ici, le frein 25 est un frein à ressort.

En variante, non représentée, le frein 25 est un frein à came, un frein magnétique ou un frein électromagnétique.

Ici et comme illustré à la figure 4, le frein 25 est configuré pour être disposé, autrement dit est disposé, entre deux étages de réduction 37, 38 du réducteur 19, en particulier entre un premier étage de réduction 37 et un deuxième étage de réduction 38 de ce réducteur 19, en particulier dans la configuration assemblée de l'actionneur électromécanique 11.

En variante, non représentée, le frein 25 est configuré pour être disposé, autrement dit est disposé, dans la configuration assemblée de l'actionneur électromécanique 11, entre l'unité de contrôle 15 et le moteur électrique 16, autrement dit à l'entrée du moteur électrique 16, ou entre le réducteur 19 et l'arbre de sortie 20 de l'actionneur électromécanique 11, autrement dit à la sortie du réducteur 19, ou encore entre le moteur électrique 16 et le réducteur 19, c'est-à-dire à la sortie du moteur électrique 16.

Avantageusement, l'actionneur électromécanique 11 comprend, en outre, un dispositif de détection de fin de course et/ou d'obstacle, lors du déplacement de l'écran 2. Ce dispositif peut être mécanique ou électronique.

Avantageusement, le dispositif de détection de fin de course et/ou d'obstacle est mis en œuvre au moyen du microcontrôleur 30 de l'unité de contrôle 15 et, en particulier, au moyen d'un algorithme mis en œuvre par ce microcontrôleur 30.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne. La couronne permet ainsi de réaliser un palier. La deuxième liaison pivot, non représentée, est réalisée au niveau d'une deuxième extrémité du tube d'enroulement 4, opposée à la première extrémité.

La couronne forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Avantageusement, l'actionneur électromécanique 11 comprend, en outre, un support de couple 21.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 11.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité de contrôle 15.

Avantageusement, le support de couple 21 est fixé au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Avantageusement, le support de couple 21 comprend une première partie 21a, pouvant également être appelée « point fixe », et une deuxième partie 21b, pouvant également être appelée « tête d'actionneur ».

Avantageusement, la première partie 21a du support de couple 21 est assemblée, autrement dit est configurée pour être assemblée, avec le carter 17, en particulier dans la configuration assemblée de l'actionneur électromécanique 11. En outre, la deuxième partie 21b du support de couple 21 est configurée pour être assemblée, autrement dit est assemblée, avec le dispositif de maintien 9, 23, en particulier dans une configuration assemblée de l'actionneur électromécanique 11 dans le dispositif d'occultation 3.

Dans un exemple de réalisation, la deuxième partie 21b du support de couple 21 est assemblée, autrement dit est configurée pour être assemblée, sur la première partie 21a du support de couple 21, en particulier dans la configuration assemblée de l'actionneur électromécanique 11. Dans ce cas, la deuxième partie 21b du support de couple 21 est assemblée sur la première partie 21a du support de couple 21 au moyen d'éléments d'assemblage.

Ainsi, le support de couple 21 est constitué d'au moins deux pièces distinctes formant chacune respectivement les première et deuxième parties 21a, 21b du support de couple 21.

De cette manière, la deuxième partie 21b du support de couple 21 peut être interchangeable par rapport à la première partie 21a du support de couple 21, notamment en fonction de la forme et du type des éléments de maintien, non représentés, du dispositif de maintien 9, 23.

Dans un autre exemple de réalisation, non représenté, le support de couple 21 peut être constitué d'une seule pièce formant les première et deuxième parties 21a, 21b du support de couple 21.

Avantageusement, la deuxième partie 21b du support de couple 21 peut présenter différentes formes extérieures, notamment une forme cannelée, dite « en étoile », comme illustrée à la figure 4, autrement dit comprenant des reliefs sur son contour, ou une forme ronde, autrement dit dépourvue de reliefs sur son contour, comme illustrée à la figure 3.

Avantageusement, au moins une portion de la première partie 21a du support de couple 21 est de forme générale cylindrique et est disposée, autrement dit est configurée pour être disposée, à l'intérieur du carter 17, en particulier dans la configuration assemblée de l'actionneur électromécanique 11.

Avantageusement, un diamètre extérieur Ø21 d'au moins une portion de la deuxième partie 21b du support de couple 21 est supérieur à un diamètre extérieur Ø17 du carter 17.

Avantageusement, le support de couple 21 comprend, en outre, une butée 33. En outre, la butée 33 est en appui, autrement dit est configurée pour être en appui, contre le carter 17, au niveau de la première extrémité 17a du carter 17, en particulier dans la configuration assemblée de l'actionneur électromécanique 11.

Ainsi, la butée 33 du support de couple 21 permet de limiter l'enfoncement de la première partie 21a du support de couple 21 dans le carter 17, suivant la direction de l'axe de rotation X.

Ici, la butée 33 du support de couple 21 comprend un épaulement. Plus particulièrement, elle est réalisée sous la forme d'une collerette, en particulier de forme cylindrique et à génératrice rectiligne.

Dans un exemple de réalisation, la couronne est disposée ou insérée, autrement dit est configurée pour être disposée ou insérée, autour du support de couple 21, en particulier de la première partie 21a du support de couple 21, notamment dans la configuration assemblée de l'actionneur électromécanique 11. Dans ce cas, la couronne est montée libre en rotation autour du support de couple 21, en particulier de la première partie 21a du support de couple 21.

En variante, non représentée, la couronne est disposée ou insérée, autrement dit est configurée pour être disposée ou insérée, autour d'une partie du carter 17, en particulier dans la configuration assemblée de l'actionneur électromécanique 11. Dans ce cas, la couronne est montée libre en rotation autour du carter 17.

Dans une autre variante, non représentée, la couronne est disposée ou insérée, autrement dit est configurée pour être disposée ou insérée, d'une part, autour du support de couple 21 et, d'autre part, autour d'une partie du carter 17 de l'actionneur électromécanique 11, en particulier de la première extrémité 17a du carter 17, notamment dans la configuration assemblée de l'actionneur électromécanique 11. Dans un tel cas, la couronne peut être montée libre en rotation, d'une part, autour du support de couple 21 et, d'autre part, autour du carter 17 de l'actionneur électromécanique 11.

Avantageusement, le support de couple 21 comprend, en outre, un couvercle 22, comme illustré uniquement à la figure 3. Le couvercle 22 est monté, autrement dit est configuré pour être monté, sur le support de couple 21, notamment sur la deuxième partie 21b du support de couple 21, en particulier dans la configuration assemblée de l'actionneur électromécanique 11.

Avantageusement, l'unité de contrôle 15 est disposée au moins en partie à l'intérieur du carter 17 de l'actionneur électromécanique 11.

Par ailleurs, l'unité de contrôle 15 peut être disposée au moins en partie à l'extérieur du carter 17 de l'actionneur électromécanique 11 et, en particulier, montée dans le support de couple 21 ou dans l'un des supports 23.

Avantageusement, l'unité de contrôle 15 comprend une première carte électronique 15a et une deuxième carte électronique, non représentée.

Ici, la première carte électronique 15a de l'unité de contrôle 15 est disposée à l'intérieur du carter 17 de l'actionneur électromécanique 11, en particulier dans la configuration assemblée de l'actionneur électromécanique 11. En outre, la deuxième carte électronique est disposée à l'intérieur du support de couple 21 de l'actionneur électromécanique 11, en particulier dans la configuration assemblée de l'actionneur électromécanique 11.

Avantageusement, la première carte électronique 15a est configurée pour contrôler le moteur électrique 16. En outre, la deuxième carte électronique est configurée pour, notamment, accéder à des fonctions de paramétrage et/ou de configuration de l'actionneur électromécanique 11, au moyen de dispositifs de sélection 57, dont un seul est représenté à la figure 3, et, éventuellement, de dispositifs d'affichage, non représentés.

Ici, l'unité de contrôle 15, en particulier chacune des première et deuxième cartes électroniques 15a et équivalente, est alimentée en énergie électrique au moyen du câble d'alimentation électrique 18.

Avantageusement, le support de couple 21 comprend, autrement dit intègre, au moins un dispositif de sélection 57, comme illustré à la figure 3, en particulier un bouton, pouvant être, par exemple, de type poussoir ou magnétique. En outre, le ou chaque dispositif de sélection 57 est configuré, notamment, pour réaliser un réglage de l'actionneur électromécanique 11 au travers d'un ou plusieurs modes de configuration, pour appairer avec l'actionneur électromécanique 11 une ou plusieurs unités de commande 12, 13, pour réinitialiser un ou plusieurs paramètres, pouvant être, par exemple, une position de fin de course, pour réinitialiser la ou les unités de commande 12, 13 appairées ou encore pour commander le déplacement de l'écran 2.

Avantageusement, le support de couple 21 comprend, autrement dit intègre, au moins un dispositif d'affichage, non représenté. En outre, le ou chaque dispositif d'affichage est configuré, notamment, pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5.

Avantageusement, l'actionneur électromécanique 11 comprend, en outre, un dispositif de comptage 59. Le dispositif de comptage 59 est configuré pour coopérer, autrement dit coopère, avec l'unité de contrôle 15. En outre, le dispositif de comptage 59 et l'unité de contrôle 15 sont configurés pour déterminer une position, pouvant être appelée « courante », de l'écran 2.

Avantageusement, l'unité de contrôle 15 est configurée pour surveiller au moins un signal provenant du dispositif de comptage 59 à une fréquence prédéterminée, notamment en fonction de la position de l'écran 2.

Ici, le dispositif de comptage 59 est de type magnétique.

Dans un tel cas, le dispositif de comptage 59 peut comprendre une roue codeuse 60 et un ou plusieurs capteurs 61, en particulier à effet Hall.

Ici, la roue codeuse 60 est reliée à l'arbre 53 du rotor 16a du moteur électrique 16, en particulier au niveau de la première extrémité 53a de l'arbre 53. En outre, le ou chaque capteur 61 est assemblé sur une carte électronique de l'unité de contrôle 15, en particulier sur une troisième carte électronique 15c, ou, en variante, sur la première carte électronique 15a.

Ainsi, le dispositif de comptage 59 permet de déterminer le nombre de tours réalisés par le rotor 16a du moteur électrique 16.

Ici, le dispositif de comptage 59 comprend trois capteurs 61, dont seuls deux sont visibles aux figures 4 et 5.

Le nombre de capteurs n'est pas limitatif et peut être différent. Il peut être, par exemple, égal à un ou à deux.

En variante, non représentée, le dispositif de comptage 59 peut être dépourvu de capteurs 61. Dans ce cas, le dispositif de comptage 59 est configuré pour, en coopération avec l'unité de contrôle 15, analyser les signaux de commande d'alimentation en énergie électrique du moteur électrique 16 et déterminer une position, pouvant être appelée « courante », du rotor 16a du moteur électrique 16 et, par conséquent, de l'arbre de sortie 20 de l'actionneur électromécanique 11 et du tube d'enroulement 4.

En variante, non représentée, le dispositif de comptage 59 permet de déterminer le nombre de tours réalisés par l'arbre de sortie 20 de l'actionneur électromécanique 11.

Dans une autre variante ou en complément, la couronne comprend, sur sa face intérieure, une denture, non représentée, configurée pour coopérer, autrement dit coopérant, avec un pignon, non représenté, installé à l'intérieur du support de couple 21 ou, alternativement, à l'intérieur du carter 17 de l'actionneur électromécanique 11. Dans cette variante, la roue codeuse 60 est reliée au pignon, en particulier au moyen d'un arbre. Ainsi, la denture de la couronne est configurée pour entraîner en rotation, autrement dit entraîne en rotation, le pignon, de sorte à compter le nombre de tours du tube d'enroulement 4. Dans ce cas, la denture de la couronne et le pignon font partie du dispositif de comptage 59.

Le dispositif de comptage 59 permet également de déterminer le sens de rotation du tube d'enroulement 4 et/ou de gérer les positions de fin de course de l'écran 2.

Le type du dispositif de comptage n'est pas limitatif et peut être différent, en particulier optique, par exemple un encodeur équipé d'un ou plusieurs capteurs optiques, ou temporel.

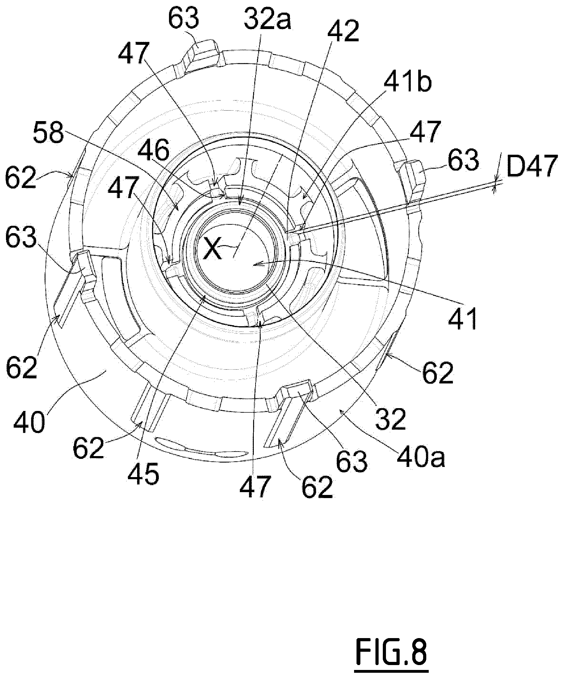

On décrit à présent, plus en détail et en référence aux figures 5 à 9, la construction du moteur électrique 16.

Le moteur électrique 16 comprend, en outre, un premier palier 32. L'arbre 53, en particulier la première extrémité 53a de l'arbre 53, est supporté, autrement dit est configuré pour être supporté, par le premier palier 32, en particulier dans une configuration assemblée du moteur électrique 16.

Le premier palier 32 comprend une surface externe 45.

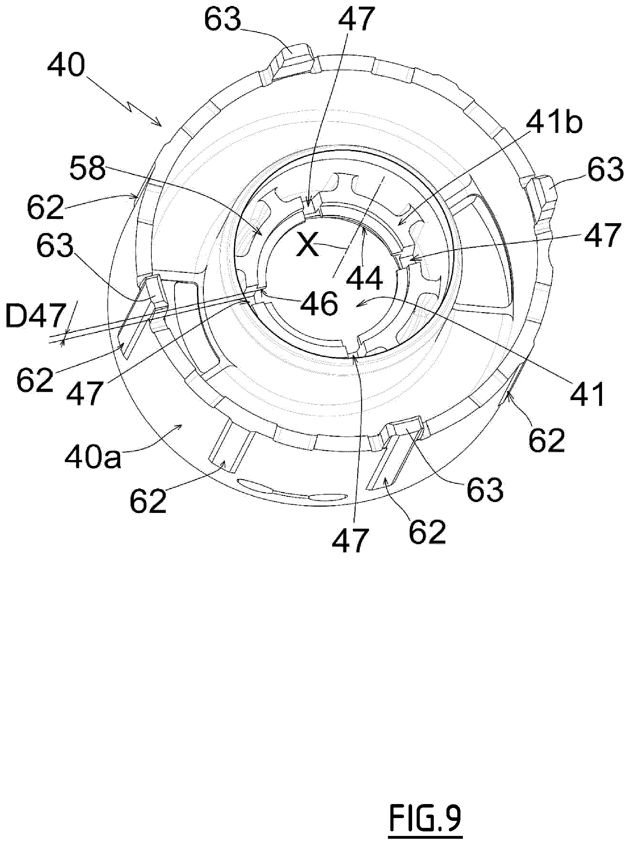

Le moteur électrique 16 comprend, en outre, un premier flasque 40. Ce premier flasque 40 est représenté seul à la figure 9.

Le premier flasque 40 comprend au moins un premier logement 41. Le premier palier 32 est disposé, autrement dit est configuré pour être disposé, à l'intérieur du premier logement 41, en particulier dans la configuration assemblée du moteur électrique 16.

Le premier logement 41 comprend au moins une surface interne 44, une ouverture d'entrée 52, un premier épaulement 46 et une pluralité d'encoches 47. Chacune des encoches 47 est ménagée dans la surface interne 44 du premier logement 41. La surface interne 44 est radiale à l'axe de rotation X, en particulier dans la configuration assemblée du moteur électrique 16.

Le moteur électrique 16 comprend, en outre, un joint élastique annulaire 42. Le joint élastique annulaire 42 est disposé, autrement dit est configuré pour être disposé, autour du premier palier 32, en particulier dans la configuration assemblée du moteur électrique 16. Le joint élastique annulaire 42 est comprimé, autrement dit est configuré pour être comprimé, entre la surface interne 44 du premier logement 41 du premier flasque 40 et la surface externe 45 du premier palier 32, en particulier dans la configuration assemblée du moteur électrique 16.

Chacune des encoches 47 s'étend à partir du premier épaulement 46 vers l'ouverture d'entrée 52 sur une première distance prédéterminée D47, suivant la direction de l'axe de rotation X. La première distance prédéterminée D47 est strictement inférieure à une première longueur L1 mesurée entre le premier épaulement 46 et l'ouverture d'entrée 52, suivant la direction de l'axe de rotation X.

En outre, le joint élastique annulaire 42 est introduit, autrement dit est configuré pour être introduit, à l'intérieur des encoches 47, dans une position du joint élastique annulaire 42 inséré à l'intérieur du premier logement 41 du premier flasque 40, autrement dit suite à l'insertion du joint élastique annulaire 42 à l'intérieur du premier logement 41 du premier flasque 40, ou autrement dit dans la configuration assemblée du moteur électrique 16, de sorte que le joint élastique annulaire 42 se relâche localement à l'intérieur de ces encoches 47.

Ainsi, cette construction du moteur électrique 16 permet, d'une part, de garantir la conformité d'assemblage du joint élastique annulaire 42, qui est assemblé sur le premier palier 32, à l'intérieur du premier logement 41 du premier flasque 40 et, d'autre part, de minimiser un niveau de bruit de fonctionnement du moteur électrique 16.

De cette manière, le joint élastique annulaire 42 peut être inséré, autrement dit est inséré, à partir de l'ouverture d'entrée 52 du premier logement 41 jusqu'aux encoches 47 ménagées dans la surface interne 44 du premier logement 41, de sorte que le joint élastique annulaire 42 se relâche localement à l'intérieur de ces encoches 47.

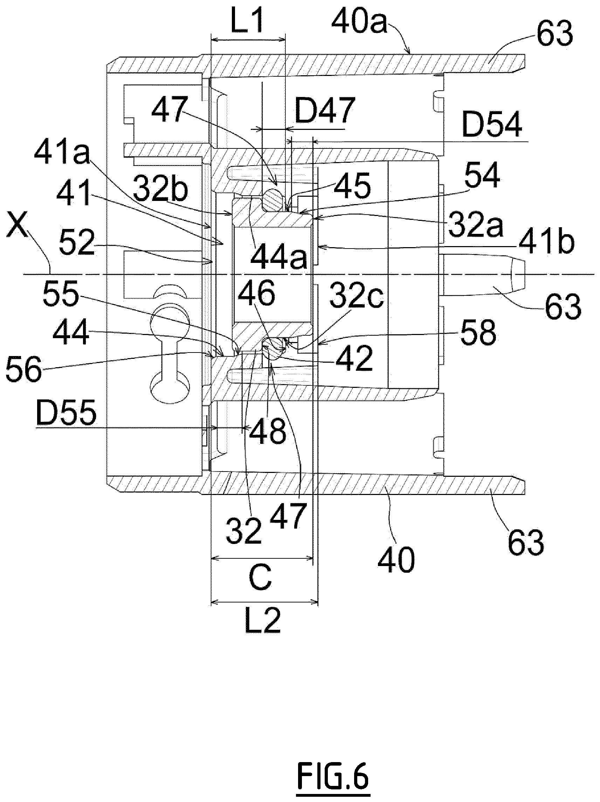

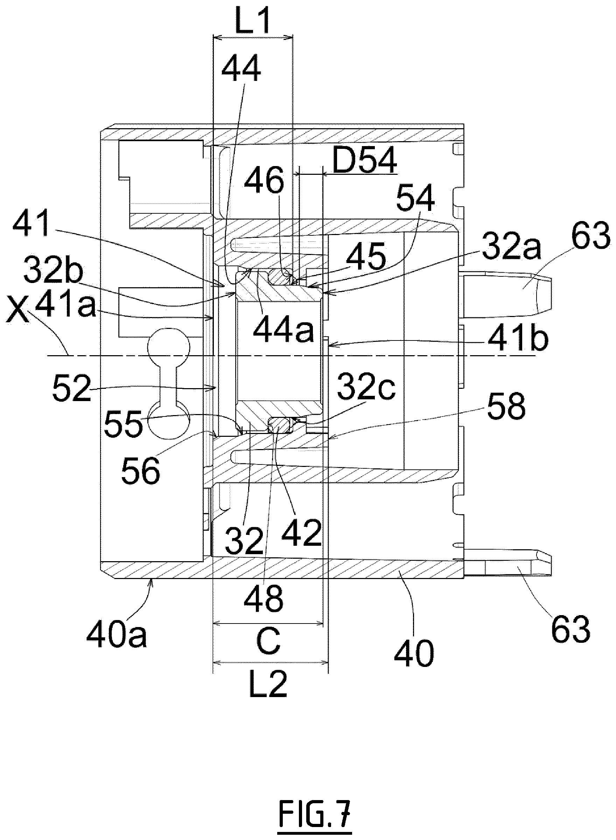

Les encoches 47 sont donc présentes uniquement à la fin du trajet d'insertion du joint élastique annulaire 42 à l'intérieur du premier logement 41 du premier flasque 40. Ce trajet va de la gauche vers la droite sur les figures 6 et 7.

Par conséquent, ces encoches 47 n'engendrent pas un vrillage, ni, éventuellement, une déchirure du joint élastique annulaire 42, lors de l'insertion du joint élastique annulaire 42, qui est assemblé sur le premier palier 32, à l'intérieur du premier logement 41 du premier flasque 40.

En outre, le positionnement du joint élastique annulaire 42 dans les encoches 47 ménagées dans la surface interne 44 du premier logement 41 permet de garantir le maintien en position du premier palier 32 par rapport au premier logement 41, en particulier suivant la direction de l'axe de rotation X, que ce soit lors du fonctionnement du moteur électrique 16 ou lors d'une chute de celui-ci au cours d'une opération de manutention.

Le positionnement du joint élastique annulaire 42 dans les encoches 47 ménagées dans la surface interne 44 du premier logement 41 permet également d'empêcher une rotation du premier palier 32, autour de l'axe de rotation X, par adhérence du premier palier 32 sur le joint élastique annulaire 42.

Par ailleurs, la compression d'une partie du joint élastique annulaire 42 entre la surface interne 44 du premier logement 41 du premier flasque 40 et la surface externe 45 du premier palier 32, autrement dit le maintien en position de la partie du joint élastique annulaire 42 en dehors des encoches 47 ménagées dans la surface interne 44 du premier logement 41, permet d'obtenir une liaison rotule et, plus particulièrement, d'amortissement entre le premier palier 32 et le premier logement 41 du premier flasque 40.

Avantageusement, le premier palier 32 comprend une première extrémité 32a et une deuxième extrémité 32b. La deuxième extrémité 32b est opposée à la première extrémité 32a. La deuxième extrémité 32b est orientée vers l'ouverture d'entrée 52 du premier logement 41 du premier flasque 40, suite à l'insertion du premier palier 32 à l'intérieur du premier logement 41, autrement dit dans la configuration assemblée du moteur électrique 16.

Avantageusement, la surface externe 45 du premier palier 32 comprend une partie lisse 32c et, en particulier, de forme cylindrique à section circulaire. En outre, la partie lisse 32c de la surface externe 45 du premier palier 32 coopère, autrement dit est configurée pour coopérer, avec le joint élastique annulaire 42.

Avantageusement, une partie de la surface externe 45 du premier palier 32 forme une pente d'introduction 54, de sorte à introduire le joint élastique annulaire 42 sur la surface externe 45 du premier palier 32.

Ainsi, la pente d'introduction 54 de la surface externe 45 du premier palier 32 permet de mettre en place et de centrer le joint élastique annulaire 42 sur la surface externe 45 du premier palier 32, suivant la direction de l'axe de rotation X.

Avantageusement, la pente d'introduction 54 s'étend sur une deuxième distance prédéterminée D54 à partir de la première extrémité 32a du premier palier 32 vers le premier épaulement 46, suivant la direction de l'axe de rotation X.

Avantageusement, la surface interne 44 du premier logement 41 comprend une partie lisse 44a et, en particulier, de forme cylindrique à section circulaire. En outre, la partie lisse 44a de la surface interne 44 du premier logement 41 coopère, autrement dit est configurée pour coopérer, avec le joint élastique annulaire 42.

Avantageusement, chacune des encoches 47 s'étend au moins en partie à partir du premier épaulement 46 vers l'ouverture d'entrée 52 sur tout ou partie de la partie lisse 44a de la surface interne 44 du premier logement 41, selon la direction de l'axe de rotation X.

Avantageusement, au moins une partie de la surface interne 44 du premier logement 41 forme une pente de guidage 55, de sorte à guider le joint élastique annulaire 42 contre la surface interne 44 du premier logement 41.

Ainsi, la pente de guidage 55 de la surface interne 44 du premier logement 41 permet de centrer le premier flasque 40 par rapport au premier palier 32 via le joint élastique annulaire 42, suivant la direction de l'axe de rotation X.

Avantageusement, la pente de guidage 55 s'étend sur une troisième distance prédéterminée D55 à partir de l'ouverture d'entrée 52 du premier logement 41 vers les encoches 47, suivant la direction de l'axe de rotation X.

En outre, la présence de la pente d'introduction 54 au niveau de la surface externe 45 du premier palier 32 et la présence de la pente de guidage 55 au niveau de la surface interne 44 du premier logement 41 permettent de garantir la conformité de l'assemblage du joint élastique annulaire 42, qui est assemblé sur le premier palier 32, à l'intérieur du premier logement 41 du premier flasque 40, c'est-à-dire sans vrillage et/ou déchirure du joint élastique annulaire 42, tout en s'affranchissant d'une opération de huilage du premier logement 41.

Avantageusement, chacune des encoches 47 est interrompue avant la pente de guidage 55 de la surface interne 44 du premier logement 41, selon la direction de l'axe de rotation X et en direction de l'ouverture 52 à partir du premier épaulement 46.

Avantageusement, l'ouverture d'entrée 52 du premier logement 41 comprend un chanfrein 56.

Ici, le chanfrein 56 fait partie intégrante de la pente de guidage 55.

Avantageusement, le premier palier 32 comprend un deuxième épaulement 48. En outre, le joint élastique annulaire 42 est disposé, autrement dit est configuré pour être disposé, entre le premier épaulement 46 et le deuxième épaulement 48, en particulier dans la configuration assemblée du moteur électrique 16.

Avantageusement, le premier palier 32 est un coussinet.

Avantageusement, le joint élastique annulaire 42 est un joint torique.

Avantageusement, le joint élastique annulaire 42 est réalisé en élastomère, par exemple en caoutchouc.

Ici, le joint élastique annulaire 42 présente une section de forme circulaire, en particulier à l'état de repos, autrement dit avant son montage autour du premier palier 32 et son introduction dans le premier logement 41.

La forme de la section du joint élastique annulaire n'est pas limitative et peut être différente. Elle peut être, par exemple, ovale ou carrée.

Avantageusement, l'insertion du premier palier 32 à l'intérieur du premier logement 41 du premier flasque 40 est mise en œuvre selon une cote C prédéterminée entre l'ouverture d'entrée 52 du premier logement 41 et la première extrémité 32a du premier palier 32, dans la configuration assemblée du moteur électrique 16. La cote C est axiale, en ce sens qu'elle est mesurée parallèlement à l'axe de rotation X, en particulier dans la configuration assemblée du moteur électrique 16.

Avantageusement, la cote C prédéterminée est inférieure ou égale à une deuxième longueur L2 mesurée entre l'ouverture d'entrée 52 du première logement 41 et une extrémité de fond 58 du premier logement 41.

L'extrémité de fond 58 peut être une ouverture de sortie ou une paroi de fond du premier logement 41.

Ainsi, le premier palier 32 ne dépasse pas de l'extrémité de fond 58 ou n'est pas en appui contre l'extrémité de fond 58, suite à l'insertion du premier palier 32 à l'intérieur du premier logement 41, autrement dit dans la configuration assemblée du moteur électrique 16.

Avantageusement, le joint élastique annulaire 42 n'est pas en contact avec le premier épaulement 46 du premier logement 41, suite à l'insertion du joint élastique annulaire 42 à l'intérieur du premier logement 41, autrement dit dans la configuration assemblée du moteur électrique 16.

Ainsi, dans ce cas, le premier épaulement 46 du premier logement 41 est une butée, selon la direction de l'axe de rotation X, notamment lors d'une chute du moteur électrique 16 au cours d'une opération de manutention.

En variante, non représentée, le joint élastique annulaire 42 est en contact avec le premier épaulement 46 du premier logement 41, suite à l'insertion du joint élastique annulaire 42 à l'intérieur du premier logement 41, autrement dit dans la configuration assemblée du moteur électrique 16.

Ainsi, dans ce cas, le premier épaulement 46 du premier logement 41 est une butée, selon la direction de l'axe de rotation X, pour limiter la course d'insertion du joint élastique annulaire 42 et, par conséquent, du premier palier 32 à l'intérieur du premier logement 41.

Avantageusement, le moteur électrique 16 comprend, en outre, un deuxième palier 49. En outre, l'arbre 53, en particulier la deuxième extrémité 53b de l'arbre 53, est supporté, autrement dit est configuré pour être supporté, par le deuxième palier 49, en particulier dans la configuration assemblée du moteur électrique 16.

Avantageusement, le moteur électrique 16 comprend, en outre, un deuxième flasque 50. Le deuxième flasque 50 comprend un deuxième logement 51. En outre, le deuxième palier 49 est disposé, autrement dit est configuré pour être disposé, à l'intérieur du deuxième logement 51, en particulier dans la configuration assemblée du moteur électrique 16.

Avantageusement, le deuxième palier 49 est un roulement.

Ici et comme illustré aux figures 4 et 5, le deuxième palier 49 est un roulement à billes.

Le type de roulement formant le deuxième palier n'est pas limitatif et peut être différent. Il peut être, par exemple, à rouleaux ou à aiguilles.

Ici, les premier et deuxième flasques 40, 50 sont réalisés dans une matière plastique.

A titre d'exemple nullement limitatif, la matière plastique des premier et deuxième flasques 40, 50 est du Poly-Butylène Téréphtalate, également appelé PBT, du PolyAmide 6, également appelé polycaprolactame ou PA 6, ou du PolyAmide 6.6, également appelé polyhexaméthylène adipamide ou PA 6.6.

Avantageusement, le premier flasque 40, respectivement le deuxième flasque 50, comprend, en outre, une pluralité de pattes 63. Le stator 16b comprend une pluralité d'encoches, non représentées. Chacune des pattes 63 du premier flasque 40, respectivement du deuxième flasque 50, est insérée, autrement dit est configurée pour être insérée, dans l'une des encoches du stator 16b, en particulier dans la configuration assemblée du moteur électrique 16.

Ainsi, le premier flasque 40, respectivement le deuxième flasque 50, est orienté angulairement, autrement dit est indexé, par rapport au stator 16b, autour de l'axe de rotation X.

Avantageusement, le carter 17 comprend une surface interne 17c et une surface externe 17d. La surface externe 17d est opposée à la surface interne 17c.

Avantageusement, le premier flasque 40, respectivement le deuxième flasque 50, comprend une surface externe 40a, 50a. Le premier flasque 40, respectivement le deuxième flasque 50, comprend des surépaisseurs 62, autrement dit des godrons, ménagés sur sa face externe 40a, 50a. En outre, chaque surépaisseur 62 est en appui, autrement dit est configurée pour être en appui, contre la surface interne 17c du carter 17, en particulier dans la configuration assemblée de l'actionneur électromécanique 11.

Ainsi, le stator 16b est centré à l'intérieur du carter 17 au moyen des surépaisseurs 62 du premier flasque 40, respectivement du deuxième flasque 50, selon une direction radiale à l'axe de rotation X.

Avantageusement, au moins l'une des surépaisseurs 62 est alignée avec l'une des pattes 63 du premier flasque 40, respectivement du deuxième flasque 50, suivant la direction de l'axe de rotation X.

Ici, le premier logement 41 comprend une première extrémité 41a et une deuxième extrémité 58. La deuxième extrémité 58 est opposée à la première extrémité 41a. La première extrémité 41a du premier logement 41 est disposée au niveau de l'ouverture d'entrée 52 de celui-ci.

Ici, l'extrémité de fond 58 et la deuxième extrémité 58 du premier logement 41 sont communes.

Dans l'exemple de réalisation illustré aux figures 6 à 9, les encoches 47 s'étendent, en outre, au-delà du premier épaulement 46 en direction opposée à l'ouverture d'entrée 52 du premier logement 41, selon la direction de l'axe de rotation X, en particulier au travers du premier épaulement 46 et jusqu'à la deuxième extrémité 41b du premier logement 41.

Ainsi, la fabrication du premier flasque 40 est facilitée, en particulier lorsque celui-ci est obtenu par un procédé d'injection d'une matière plastique.

En variante, non représentée, les encoches 47 ne dépassent pas le premier épaulement 46, selon la direction de l'axe de rotation X.

On décrit à présent un procédé de fabrication de l'actionneur électromécanique 11 illustré aux figures 3 à 9.

Le procédé de fabrication comprend au moins les étapes suivantes, de préférence exécutées dans l'ordre mentionné :
- assemblage du joint élastique annulaire 42 autour du premier palier 32,
- insertion du joint élastique annulaire 42, qui est assemblé sur le premier palier 32, à l'intérieur du premier logement 41 du premier flasque 40, et
- suite à l'étape d'insertion, introduction du joint élastique annulaire 42 à l'intérieur des encoches 47.

Avantageusement, l'étape d'insertion est mise en œuvre par une opération de chassage du premier flasque 40 sur le premier palier 32 équipé du joint élastique annulaire 42.

Avantageusement, le procédé comprend, en outre, une étape de montage du rotor 16a à l'intérieur du stator 16b, où la première extrémité 53a de l'arbre 53 du rotor 16a est insérée dans le premier palier 32.

Avantageusement, l'étape d'assemblage comprend une sous-étape d'introduction du joint élastique annulaire 42 sur la surface externe 45 du premier palier 32, au moyen de la pente d'introduction 54.

Avantageusement, l'étape d'insertion comprend une sous-étape d'introduction du joint élastique annulaire 42 à l'intérieur du premier logement 41 du premier flasque 40, au moyen du chanfrein 56, et une sous-étape de guidage du joint élastique annulaire 42 contre la surface interne 44 du premier logement 41, au moyen de la pente de guidage 55.

Grâce à la présente invention, la construction du moteur électrique permet, d'une part, de garantir la conformité d'assemblage du joint élastique annulaire, qui est assemblé sur le premier palier, à l'intérieur du premier logement du premier flasque et, d'autre part, de minimiser un niveau de bruit de fonctionnement du moteur électrique.

De nombreuses modifications peuvent être apportées à l'exemple de réalisation et aux variantes décrits précédemment, sans sortir du cadre de l'invention défini par les revendications.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (11) pour un dispositif d'occultation (3), l'actionneur électromécanique (11) comprenant au moins un moteur électrique (16), le moteur électrique (16) comprenant au moins :
- un rotor (16a), le rotor (16a) comprenant au moins un arbre (53),
- un stator (16b), le rotor (16a) et le stator (16b) étant positionnés de manière coaxiale autour d'un axe de rotation (X),
- un premier palier (32), le premier palier (32) comprenant une surface externe (45), l'arbre (53) étant supporté par le premier palier (32),
- un premier flasque (40), le premier flasque (40) comprenant au moins un premier logement (41), le premier logement (41) comprenant au moins une surface interne (44), une ouverture d'entrée (52), un premier épaulement (46) et une pluralité d'encoches (47), le premier palier (32) étant disposé à l'intérieur du premier logement (41), chacune des encoches (47) étant ménagée dans la surface interne (44) du premier logement (41), et
- un joint élastique annulaire (42), le joint élastique annulaire (42) étant disposé autour du premier palier (32), le joint élastique annulaire (42) étant comprimé entre la surface interne (44) du premier logement (41) du premier flasque (40) et la surface externe (45) du premier palier (32),
**caractérisé**
**en ce que** chacune des encoches (47) s'étend à partir du premier épaulement (46) vers l'ouverture d'entrée (52) sur une première distance prédéterminée (D47), suivant la direction de l'axe de rotation (X), la première distance prédéterminée (D47) étant strictement inférieure à une première longueur (L1) mesurée entre le premier épaulement (46) et l'ouverture d'entrée (52), suivant la direction de l'axe de rotation (X),
et **en ce que** le joint élastique annulaire (42) est introduit à l'intérieur des encoches (47), dans une position du joint élastique annulaire (42) inséré à l'intérieur du premier logement (41) du premier flasque (40), de sorte que le joint élastique annulaire (42) se relâche localement à l'intérieur de ces encoches (47).

2. Actionneur électromécanique (11) pour un dispositif d'occultation (3) selon la revendication 1, **caractérisé**
**en ce que** le premier palier (32) comprend un deuxième épaulement (48),
et **en ce que** le joint élastique annulaire (42) est disposé entre le premier épaulement (46) et le deuxième épaulement (48).

3. Actionneur électromécanique (11) pour un dispositif d'occultation (3) selon la revendication 1 ou selon la revendication 2, **caractérisé en ce que** le premier palier (32) est un coussinet.

4. Actionneur électromécanique (11) pour un dispositif d'occultation (3) selon l'une quelconque des revendications 1 à 3, **caractérisé en ce que** le moteur électrique (16) comprend, en outre :
- un deuxième palier (49), l'arbre (53) étant supporté par le deuxième palier (49), et
- un deuxième flasque (50), le deuxième flasque (50) comprenant un deuxième logement (51), le deuxième palier (49) étant disposé à l'intérieur du deuxième logement (51).

5. Actionneur électromécanique (11) pour un dispositif d'occultation (3) selon la revendication 4, **caractérisé en ce que** le deuxième palier (49) est un roulement.

6. Actionneur électromécanique (11) pour un dispositif d'occultation (3) selon l'une quelconque des revendications 1 à 5, **caractérisé en ce qu'**une partie de la surface externe (45) du premier palier (32) forme une pente d'introduction (54), de sorte à introduire le joint élastique annulaire (42) sur la surface externe (45) du premier palier (32), la pente d'introduction (54) s'étendant sur une deuxième distance prédéterminée (D54) à partir d'une première extrémité (32a) du premier palier (32) vers le premier épaulement (46), suivant la direction de l'axe de rotation (X).

7. Actionneur électromécanique (11) pour un dispositif d'occultation (3) selon l'une quelconque des revendications 1 à 6, **caractérisé en ce qu'**au moins une partie de la surface interne (44) du premier logement (41) forme une pente de guidage (55), de sorte à guider le joint élastique annulaire (42) contre la surface interne (44) du premier logement (41).

8. Actionneur électromécanique (11) pour un dispositif d'occultation (3) selon l'une quelconque des revendications 1 à 7, **caractérisé en ce que** l'ouverture d'entrée (52) du premier logement (41) comprend un chanfrein (56).

9. Dispositif d'occultation (3),
le dispositif d'occultation (3) comprenant au moins :
- un écran (2), et
- un actionneur électromécanique (11), l'écran (2) étant entraîné en déplacement par l'actionneur électromécanique (11),
**caractérisé en ce que** l'actionneur électromécanique (11) est conforme à l'une quelconque des revendications 1 à 8.

10. Procédé de fabrication d'un actionneur électromécanique (11) pour un dispositif d'occultation (3) selon l'une quelconque des revendications 1 à 8,
ledit procédé comprenant au moins :
- une étape d'assemblage du joint élastique annulaire (42) autour du premier palier (32), et
- une étape d'insertion du joint élastique annulaire (42), qui est assemblé sur le premier palier (32), à l'intérieur du premier logement (41) du premier flasque (40), **caractérisé en ce que** ledit procédé comprend, en outre :
- suite à l'étape d'insertion, une étape d'introduction du joint élastique annulaire (42) à l'intérieur des encoches (47).

## Patentansprüche

1. Elektromechanischer Aktuator (11) für eine Verdunkelungsvorrichtung (3), der elektromechanische Aktuator (11) umfassend mindestens einen Elektromotor (16), der Elektromotor (16) mindestens Folgendes umfassend:
- einen Rotor (16a), der Rotor (16a) umfassend mindestens eine Welle (53),
- einen Stator (16b), wobei der Rotor (16a) und der Stator (16b) koaxial um eine Drehachse (X) positioniert sind,
- ein erstes Lager (32), das erste Lager (32) umfassend eine Außenfläche (45), wobei die Welle (53) von dem ersten Lager (32) gelagert wird,
- einen ersten Flansch (40), der erste Flansch (40) umfassend mindestens eine erste Aufnahme (41), die erste Aufnahme (41) umfassend mindestens eine Innenfläche (44), eine Eintrittsöffnung (52), eine erste Schulter (46) und eine Vielzahl von Kerben (47), wobei das erste Lager (32) im Inneren der ersten Aufnahme (41) angeordnet ist, jede der Kerben (47) in der Innenfläche (44) der ersten Aufnahme (41) ausgebildet ist, und
- eine ringförmige elastische Dichtung (42), wobei die ringförmige elastische Dichtung (42) um das erste Lager (32) herum angeordnet ist, wobei die ringförmige elastische Dichtung (42) zwischen der Innenfläche (44) der ersten Aufnahme (41) des ersten Flanschs (40) und der Außenfläche (45) des ersten Lagers (32) zusammengedrückt ist,
**dadurch gekennzeichnet,**
**dass** sich jede der Kerben (47) von der ersten Schulter (46) in Richtung der Eintrittsöffnung (52) über einen ersten vorbestimmten Abstand (D47) entlang der Richtung der Drehachse (X) erstreckt, wobei der erste vorbestimmte Abstand (D47) strikt kleiner ist als eine erste Länge (L1), die in Richtung der Drehachse (X) zwischen der ersten Schulter (46) und der Eintrittsöffnung (52) gemessen wird,
und **dass** die ringförmige elastische Dichtung (42) in die Kerben (47) eingeführt ist, in einer Position, in der die ringförmige elastische Dichtung (42) in das Innere der ersten Aufnahme (41) des ersten Flanschs (40) eingeführt ist, sodass sich die ringförmige elastische Dichtung (42) lokal im Inneren dieser Kerben (47) entspannt.

2. Elektromechanischer Aktuator (11) für eine Verdunkelungsvorrichtung (3) nach Anspruch 1, **dadurch gekennzeichnet,**
**dass** das erste Lager (32) eine zweite Schulter (48) umfasst,
und **dass** die ringförmige elastische Dichtung (42) zwischen der ersten Schulter (46) und der zweiten Schulter (48) angeordnet ist.

3. Elektromechanischer Aktuator (11) für eine Verdunkelungsvorrichtung (3) nach Anspruch 1 oder nach Anspruch 2, **dadurch gekennzeichnet, dass** das erste Lager (32) ein Gleitlager ist.

4. Elektromechanischer Aktuator (11) für eine Verdunkelungsvorrichtung (3) nach einem der Ansprüche 1 bis 3, **dadurch gekennzeichnet, dass** der Elektromotor (16) ferner Folgendes umfasst:
- ein zweites Lager (49), wobei die Welle (53) von dem zweiten Lager (49) gelagert wird, und
- einen zweiten Flansch (50), wobei der zweite Flansch (50) eine zweite Aufnahme (51) umfasst, das zweite Lager (49) im Inneren der zweiten Aufnahme (51) angeordnet ist.

5. Elektromechanischer Aktuator (11) für eine Verdunkelungsvorrichtung (3) nach Anspruch 4, **dadurch gekennzeichnet, dass** das zweite Lager (49) ein Wälzlager ist.

6. Elektromechanischer Aktuator (11) für eine Verdunkelungsvorrichtung (3) nach einem der Ansprüche 1 bis 5, **dadurch gekennzeichnet, dass** ein Teil der Außenfläche (45) des ersten Lagers (32) eine Einführschräge (54) bildet, um die ringförmige elastische Dichtung (42) auf die Außenfläche (45) des ersten Lagers (32) aufzuschieben, wobei sich die Einführschräge (54) über einen zweiten vorbestimmten Abstand (D54) von einem ersten Ende (32a) des ersten Lagers (32) in Richtung der ersten Schulter (46) entlang der Drehachse (X) erstreckt.

7. Elektromechanischer Aktuator (11) für eine Verdunkelungsvorrichtung (3) nach einem der Ansprüche 1 bis 6, **dadurch gekennzeichnet, dass** mindestens ein Teil der Innenfläche (44) der ersten Aufnahme (41) eine Führungsschräge (55) bildet, um die ringförmige elastische Dichtung (42) gegen die Innenfläche (44) der ersten Aufnahme (41) zu führen.

8. Elektromechanischer Aktuator (11) für eine Verdunkelungsvorrichtung (3) nach einem der Ansprüche 1 bis 7, **dadurch gekennzeichnet, dass** die Eintrittsöffnung (52) der ersten Aufnahme (41) eine Fase (56) umfasst.

9. Verdunkelungsvorrichtung (3),
die Verdunkelungsvorrichtung (3) mindestens umfassend:
- einen Schirm (2), und
- einen elektromechanischen Aktuator (11), wobei der Schirm (2) durch den elektromechanischen Aktuator (11) in Bewegung versetzt wird,
**dadurch gekennzeichnet, dass** der elektromechanische Aktuator (11) nach einem der Ansprüche 1 bis 8 ausgebildet ist.

10. Verfahren zur Herstellung eines elektromechanischen Aktuators (11) für eine Verdunkelungsvorrichtung (3) nach einem der Ansprüche 1 bis 8, das Verfahren mindestens umfassend:
- einen Schritt des Anbringens der ringförmigen elastischen Dichtung (42) um das erste Lager (32) herum, und
- einen Schritt des Einsetzens der ringförmigen elastischen Dichtung (42), die an dem ersten Lager (32) angebracht ist, in das Innere der ersten Aufnahme (41) des ersten Flanschs (40), **dadurch gekennzeichnet, dass** das Verfahren ferner Folgendes umfasst:
- nach dem Schritt des Einsetzens, einen Schritt des Einführens der ringförmigen elastischen Dichtung (42) in das Innere der Kerben (47).

## Claims

1. An electromechanical actuator (11) for a shading device (3),
the electromechanical actuator (11) comprising at least one electric motor (16),
the electric motor (16) comprising at least:
- a rotor (16a), the rotor (16a) comprising at least a shaft (53),
- a stator (16b), the rotor (16a) and the stator (16b) being positioned coaxially around a rotation axis (X),
- a first bearing (32), the first bearing (32) comprising an external surface (45), the shaft (53) being supported by the first bearing (32),
- a first flange (40), the first flange (40) comprising at least a first housing (41), the first housing (41) comprising at least an internal surface (44), an entry opening (52), a first shoulder (46) and a plurality of notches (47), the first bearing (32) being arranged inside the first housing (41), each of the notches (47) being arranged in the internal surface (44) of the first housing (41), and
- an annular elastic seal (42), the annular elastic seal (42) being arranged around the first bearing (32), the annular elastic seal (42) being compressed between the internal surface (44) of the first housing (41) of the first flange (40) and the external surface (45) of the first bearing (32),
**characterized**
**in that** each of the notches (47) extends from the first shoulder (46) toward the entry opening (52) over a first predetermined distance (D47), according to the direction of the rotation axis (X), the first predetermined distance (D47) being strictly less than a first length (L1) measured between the first shoulder (46) and the entry opening (52), according to the direction of the rotation axis (X),
and **in that** the annular elastic seal (42) is introduced inside the notches (47), in a position of the annular elastic seal (42) inserted inside the first housing (41) of the first flange (40), so that the annular elastic seal (42) relaxes locally inside these notches (47).

2. The electromechanical actuator (11) for a shading device (3) according to claim 1, **characterized**
**in that** the first bearing (32) comprises a second shoulder (48),
and **in that** the annular elastic seal (42) is arranged between the first shoulder (46) and the second shoulder (48).

3. The electromechanical actuator (11) for a shading device (3) according to claim 1 or according to claim 2, **characterized in that** the first bearing (32) is a bushing.

4. The electromechanical actuator (11) for a shading device (3) according to any one of claims 1 to 3, **characterized in that** the electric motor (16) further comprises:
- a second bearing (49), the shaft (53) being supported by the second bearing (49), and
- a second flange (50), the second flange (50) comprising a second housing (51), the second bearing (49) being arranged inside the second housing (51).

5. The electromechanical actuator (11) for a shading device (3) according to claim 4, **characterized in that** the second bearing (49) is a rolling bearing.

6. The electromechanical actuator (11) for a shading device (3) according to any one of claims 1 to 5, **characterized in that** a part of the external surface (45) of the first bearing (32) forms an introduction slope (54), so as to introduce the annular elastic seal (42) onto the external surface (45) of the first bearing (32), the introduction slope (54) extending over a second predetermined distance (D54) from a first end (32a) of the first bearing (32) toward the first shoulder (46), according to the direction of the rotation axis (X).

7. The electromechanical actuator (11) for a shading device (3) according to any one of claims 1 to 6, **characterized in that** at least a part of the internal surface (44) of the first housing (41) forms a guiding slope (55), so as to guide the annular elastic seal (42) against the internal surface (44) of the first housing (41).

8. The electromechanical actuator (11) for a shading device (3) according to any one of claims 1 to 7, **characterized in that** the entry opening (52) of the first housing (41) comprises a chamfer (56).

9. A shading device (3),
the shading device (3) comprising at least:
- a screen (2), and
- an electromechanical actuator (11), the screen (2) being driven in movement by the electromechanical actuator (11),
**characterized in that** the electromechanical actuator (11) is according to any one of claims 1 to 8.

10. A method for manufacturing an electromechanical actuator (11) for a shading device (3) according to any one of claims 1 to 8,
said method comprising at least:
- a step of assembling the annular elastic seal (42) around the first bearing (32), and
- a step of inserting the annular elastic seal (42), which is assembled on the first bearing (32), inside the first housing (41) of the first flange (40),
**characterized in that** said method further comprises:
- following the insertion step, a step of introducing the annular elastic seal (42) inside the notches (47).
